# EUROPÄISCHE PATENTSCHRIFT

(11) **EP 3 424 291 B1**
(45) Veröffentlichungstag und Bekanntmachung des Hinweises auf die Patenterteilung: **29.01.2020**
(21) Anmeldenummer: 18401056.9
(22) Anmeldetag: 29.06.2018
(51) Int. Cl.: A01C 17/00

(54) **VERTEILGERÄT FÜR STREUGUT**
DISTRIBUTOR FOR SPREADING MATERIAL
APPAREIL DE DISTRIBUTION POUR MATÉRIAU D'ÉPANDAGE

(30) Priorität: 05.07.2017 DE 102017114976
(43) Veröffentlichungstag der Anmeldung: 09.01.2019
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Kleine-Hartlage, Hubertus, 49186 Bad Iburg (DE); Hilbert, Florenz, 48282 Emsdetten (DE)

(56) Entgegenhaltungen:
- DE-A1- 3 935 104
- DE-A1-102010 037 935

## Beschreibung

Die Erfindung betrifft ein Verteilgerät für Streugut nach dem Oberbegriff des Patentanspruchs 1.

Verteilgeräte für Streugut, wie beispielsweise Düngerstreuer, weisen üblicherweise eine Antriebswelle auf, mittels welcher eine Schleuderscheibe rotierend angetrieben wird. Auf der Schleuderscheibe kann eine oder können mehrere Wurfschaufeln angeordnet sein, welche das auf die Schleuderscheibe aufgegebene Streugut beschleunigen und auswerfen.

Zur Veränderung der Abwurfcharakteristik sind Verteilgeräte bekannt, bei welchen die Wurfschaufeln verstellbar sind. Ein entsprechendes Verteilgerät ist beispielsweise in der Druckschrift DE 39 35 104 A1 offenbart.

Gattungsgemäße Verteilgeräte weisen üblicherweise eine Druckquelle auf, welche beispielsweise als Hydraulikanschluss ausgebildet ist, welcher mit einem Hydrauliksystem eines Traktors verbindbar ist. Aus der Druckschrift DE 10 2007 021 442 B4 ist beispielsweise ein Düngerstreuer bekannt, dessen Wurfschaufeln hydraulisch verstellbar sind. Auch die DE 10 2010 037935 A1 offenbart eine wahlweise hydraulische Verstellung und den Oberbegriff des Anspruchs 1.

In der Praxis haben sich jedoch bisher Schleuderscheiben mit Verstelleinrichtungen durchgesetzt, welche mechanisch und/oder elektrisch betätigt werden. Derartige mechanisch und/oder elektrisch betätigbare Verstelleinrichtungen erfordern regelmäßig eine aufwändige Konstruktion, wodurch die Herstellungskosten und das Risiko eines Funktionsausfalls erhöht sind. Ferner sind die bekannten Verstelleinrichtungen funktionsspezifisch ausgebildet, sodass diese lediglich zur Umsetzung einer Funktion, beispielsweise der Ausrichtung der Wurfschaufeln, eingesetzt werden können.

Die der Erfindung zugrunde liegende Aufgabe besteht somit darin, ein Verteilgerät bereitzustellen, welches die Anordnung unterschiedlicher zu betätigender Verstelleinrichtungen im Bereich der Schleuderscheibe erlaubt, ohne dass dabei die Herstellungskosten oder das Risiko eines Funktionsausfalls wesentlich gesteigert werden.

Die Aufgabe wird gelöst durch ein Verteilgerät der eingangs genannten Art, wobei die Antriebswelle eine sich zwischen einer ersten Öffnung und einer zweiten Öffnung erstreckende Ausnehmung aufweist und eine fluidleitende Verbindung eine Druckquelle über die erste Öffnung der Antriebswelle fluidleitend mit der Ausnehmung der Antriebswelle verbindet.

Die Erfindung macht sich die Erkenntnis zunutze, dass durch die fluidleitende Verbindung zwischen der Druckquelle und der Ausnehmung in der Antriebswelle im Bereich der Schleuderscheibe ein mit Druck beaufschlagbares Betätigungsfluid bereitgestellt wird, welches zum Antrieb unterschiedlicher Verstelleinrichtungen und/oder zum gesteuerten Betrieb entsprechender Betätigungseinrichtungen verwendet werden kann. Im Betrieb des Verteilgeräts kann also das mit Druck beaufschlagbare Betätigungsfluid an der zweiten Öffnung der Antriebswelle abgenommen und zum Betätigen und/oder Steuern von einer oder mehreren Gerätekomponenten verwendet werden.

In einer bevorzugten Ausführungsform des erfindungsgemäßen Verteilgeräts erstreckt sich die Ausnehmung der Antriebswelle zumindest abschnittsweise in axialer Richtung durch die Antriebswelle. Alternativ oder zusätzlich erstreckt sich die Ausnehmung der Antriebswelle zumindest abschnittsweise in radialer Richtung durch die Antriebswelle. Beispielsweise erstreckt sich die Ausnehmung der Antriebswelle über die gesamte Länge der Antriebswelle in axialer Richtung, sodass die Antriebswelle als Hohlwelle ausgebildet ist. Wenn die Antriebswelle als Hohlwelle ausgebildet ist, sind die erste Öffnung und die zweite Öffnung, zwischen welchen sich die Ausnehmung der Antriebswelle erstreckt, vorzugsweise an den Stirnseiten der Antriebswelle angeordnet. Entsprechende Hohlwellen sind vergleichsweise kostengünstig herstellbar und erlauben die Einhaltung geringer Fertigungstoleranzen, sodass das Risiko einer Funktionsbeeinträchtigung des Verteilgeräts, beispielsweise durch eine unbeabsichtigte Leckage im Bereich der Antriebswelle, verringert ist. Die sich über die gesamte Länge der Antriebswelle in axialer Richtung erstreckende Ausnehmung ist vorzugsweise zylindrisch ausgebildet, wobei die Ausnehmung einen über die gesamte Länge konstanten Querschnitt oder mehrere Bereiche mit jeweils unterschiedlichen Querschnitten aufweisen kann.

In einer anderen Ausführungsform des erfindungsgemäßen Verteilgeräts ist die erste Öffnung an einer Stirnseite der Antriebswelle oder auf einer umlaufenden Mantelfläche der Antriebswelle angeordnet. Durch die erste Öffnung wird im Betrieb des Verteilgeräts das mit Druck beaufschlagbare Betätigungsfluid in die Ausnehmung der Antriebswelle eingeleitet. Da die fluidleitende Verbindung zwischen der Druckquelle und der ersten Öffnung der Antriebswelle im Betrieb des Verteilgeräts keine Rotationsbewegung ausführt, existiert im Bereich der ersten Öffnung der Antriebswelle ein Übergangsbereich, in welchem das Betätigungsfluid von einer nicht-rotierenden Komponente in die rotierende Antriebswelle einzuleiten ist. Hierzu schließt sich an die erste Ausnehmung der Antriebswelle vorzugsweise eine Fluidkammer an, welche den Übergangsbereich ausbildet. Die Antriebswelle erstreckt sich abschnittsweise in die Fluidkammer hinein. Die Außenseite der Antriebswelle ist vorzugsweise gegenüber der Bewandung der Fluidkammer abgedichtet, insbesondere mittels einer dynamischen Dichtung, deren Dichtwirkung durch Drehzahldifferenzen der gegeneinander abzudichtenden Flächen nicht beeinträchtigt wird.

In einer bevorzugten Weiterbildung des erfindungsgemäßen Verteilgeräts ist die zweite Öffnung an einer Stirnseite der Antriebswelle oder auf einer umlaufenden Mantelfläche der Antriebswelle angeordnet. Insbesondere erstreckt sich die Antriebswelle durch eine Ausnehmung in der Schleuderscheibe, sodass die zweite Öffnung oberhalb der Schleuderscheibe angeordnet ist, wenn die zweite Öffnung an einer Stirnseite der Antriebswelle angeordnet ist. Wenn die zweite Öffnung auf der umlaufenden Mantelfläche der Antriebswelle angeordnet ist, kann die zweite Öffnung oberhalb oder unterhalb der Schleuderscheibe angeordnet sein. Die zweite Öffnung kann ferner eine Anschlusseinrichtung zum Anschließen fluidleitender Komponenten umfassen. Die Anschlusseinrichtung kann beispielsweise ein Gewinde zum Eindrehen einer fluidleitenden Komponente aufweisen. Ferner kann im Bereich der zweiten Öffnung eine fluidleitende Komponente in den an die zweite Öffnung anschließenden Ausnehmungsabschnitt eingepresst sein.

In einer besonders bevorzugten Ausführungsform weist das Verteilgerät eine rotierend antreibbare Schleuderscheibe auf, wobei die zweite Öffnung der Antriebswelle unterhalb oder oberhalb der Schleuderscheibe angeordnet ist. Oberhalb der Schleuderscheibe befindet sich vorzugsweise der Aufgabebereich, auf welchen das zu verteilende Streugut aufgegeben wird. Vorzugsweise ist die Oberseite der Schleuderscheibe einem Dosierorgan zugewandt, welches das auf die Schleuderscheibe aufgegebene Streugut dosiert. Dadurch, dass die zweite Öffnung der Antriebswelle unterhalb oder oberhalb der Schleuderscheibe angeordnet ist, können entsprechende Verstelleinrichtungen oder Betätigungseinrichtungen, welche das Betätigungsfluid nutzen, unterhalb oder oberhalb der Schleuderscheibe angeordnet sein. Wenn die zweite Öffnung oberhalb der Schleuderscheibe angeordnet ist, ist der Zugang zu der zweiten Öffnung und den mit der zweiten Öffnung fluidleitend verbundenen Komponenten vereinfacht, sodass die Wartung dieser Komponenten ohne eine aufwändige Demontage ausführbar ist. Wenn die zweite Öffnung unterhalb der Schleuderscheibe angeordnet ist, wird vermieden, dass eine mit der zweiten Öffnung fluidleitend verbundene Verstelleinrichtung oder Betätigungseinrichtung in Kontakt mit dem auf die Schleuderscheibe aufgegebenen Streugut kommt. Das Risiko einer durch das Streugut hervorgerufenen Funktionsbeeinträchtigung wird somit verringert.

Außerdem ist ein erfindungsgemäßes Verteilgerät bevorzugt, bei welchem die Antriebswelle abschnittsweise in einem Gehäuse angeordnet ist, wobei an dem Gehäuse ein Anschlussstutzen befestigt ist und der Anschlussstutzen einen Teil der fluidleitenden Verbindung ausbildet. Vorzugsweise umfasst das Gehäuse die Fluidkammer, welche sich an die erste Öffnung der Antriebswelle anschließt. Das Gehäuse kann die Antriebswelle radial und/oder axial abstützen, wobei zwischen dem Gehäuse und der Antriebswelle ein Radiallager und/oder ein Axiallager angeordnet sein kann. Vorzugsweise ist zwischen der Außenseite der Antriebswelle und dem Gehäuse eine dynamische Dichtung angeordnet. Alternativ kann das Verteilgerät ein feststehendes Aufnahmeelement aufweisen, welches dazu eingerichtet ist, die Antriebswelle abzustützen, wobei das Aufnahmeelement an dem Gehäuse befestigt ist und ein Teil der fluidleitenden Verbindung ausbildet. Das Aufnahmeelement kann die Antriebswelle radial und/oder axial abstützen, wobei zwischen dem Aufnahmeelement und der Antriebswelle ein Radiallager und/oder ein Axiallager angeordnet sein kann. Das Aufnahmeelement kann mit einem Anschlussstutzen verbunden sein. Eine Leitung, insbesondere ein Schlauch, kann den Anschlussstutzen fluidleitend mit der Druckquelle verbinden.

In einer weiteren vorteilhaften Ausführungsform weist das erfindungsgemäße Verteilgerät ein Betätigungsglied auf, welches fluidleitend mit der zweiten Öffnung der Antriebswelle verbunden und dazu eingerichtet ist, mittels des Betätigungsfluids einen Betätigungsvorgang auszuführen. Vorzugsweise sind das Betätigungsglied und die zweite Öffnung der Antriebswelle auf der gleichen Seite ausgehend von der Schleuderscheibe angeordnet. Somit besteht nicht die Notwendigkeit einer fluidleitenden Verbindung, welche das aus der zweiten Öffnung austretende Betätigungsfluid von einer Seite der Schleuderscheibe auf die andere Seite der Schleuderscheibe leitet. Das Betätigungsglied ist vorzugsweise als längenveränderlicher Einstellzylinder ausgebildet oder umfasst einen oder mehrere längenveränderliche Einstellzylinder.

Eine besonders bevorzugte Ausführungsform des erfindungsgemäßen Verteilgeräts weist eine Rückstelleinrichtung auf, welche dazu eingerichtet ist, einen Rückstellvorgang auszuführen, wenn das Betätigungsfluid einen Druckgrenzwert unterschreitet. Durch die Rückstelleinrichtung kann beispielsweise ein Betätigungsglied nach Ausführen eines Betätigungsvorgangs durch das Ausführen des Rückstellvorgangs wieder in den ursprünglichen Zustand überführt werden, in welchem sich das Betätigungsglied vor der Ausführung des Betätigungsvorgangs befand. Vorzugsweise weist die Rückstelleinrichtung eine oder mehrere Rückstellfedern auf. Durch die Verwendung von Rückstellfedern wird die Notwendigkeit einer aktiven Rückstelleinrichtung, welche beispielsweise pneumatisch, hydraulisch, elektrisch und/oder mechanisch betrieben wird, überwunden, sodass eine einfache und kostengünstige Umsetzung der Rückstellfunktion erfolgt. Über die eine oder die mehreren Rückstellfedern kann der Druckgrenzwert eingestellt werden, bei welchem die Rückstelleinrichtung den Rückstellvorgang ausführt. Vorzugsweise ist die eine oder sind die mehreren Rückstellfedern und die zweite Öffnung der Antriebswelle auf der gleichen Seite ausgehend von der Schleuderscheibe angeordnet. Insbesondere ist die eine oder sind die mehreren Rückstellfedern und das Betätigungsglied auf der gleichen Seite ausgehend von der Schleuderscheibe angeordnet.

In einer weiteren bevorzugten Ausführungsform des erfindungsgemäßen Verteilgeräts ist das Betätigungsglied an der Schleuderscheibe befestigt. Durch die Befestigung des Betätigungsglieds an der Schleuderscheibe weist das Betätigungsglied stets die gleiche Rotationsgeschwindigkeit wie die Schleuderscheibe und die Antriebswelle auf. Somit besteht nicht die Notwendigkeit, dass die fluidleitende Verbindung zwischen der zweiten Öffnung der Antriebswelle und dem Betätigungsglied Relativbewegungen des Betätigungsglieds und der Antriebswelle auszugleichen hat. Ferner erlaubt die Befestigung des Betätigungsglieds an der Schleuderscheibe eine Vormontage der Schleuderscheibe, wodurch die Herstellung des Verteilgeräts beschleunigt und vereinfacht wird.

Bevorzugt ist außerdem ein erfindungsgemäßes Verteilgerät, bei welchem das Betätigungsglied als Hydraulikzylinder oder als Pneumatikzylinder ausgebildet ist. Wenn das Betätigungsglied als Hydraulikzylinder ausgebildet ist, ist das Betätigungsfluid vorzugsweise eine Flüssigkeit. Wenn das Betätigungsglied als Pneumatikzylinder ausgebildet ist, ist das Betätigungsfluid vorzugsweise ein Gas oder ein Gasgemisch.

In einer anderen Ausführungsform weist das erfindungsgemäße Verteilgerät ein oder mehrere verstellbare Führungselemente auf, welche dazu eingerichtet sind, das auf die Schleuderscheibe aufgegebene Streugut zu führen. Das eine oder die mehreren Führungselemente sind dabei mittels des Betätigungsglieds verstellbar. Zusätzlich zu dem einen oder den mehreren verstellbaren Führungselementen können an der Schleuderscheibe auch ein oder mehrere feststehende Führungselemente angeordnet, insbesondere befestigt sein. Das eine oder die mehreren Führungselemente können unabhängig von ihrer Verstellbarkeit als Wurfschaufeln ausgebildet sein.

In einer weiteren bevorzugten Ausführungsform des erfindungsgemäßen Verteilgeräts sind die Position, die Ausrichtung und/oder die Länge des einen oder der mehreren Führungselemente auf der Schleuderscheibe mittels des Betätigungsglieds verstellbar. Vorzugsweise ist das eine oder sind die mehreren Führungselemente mittels des Betätigungsglieds verschwenkbar und/oder verkippbar. Durch die Verstellung der Position, der Ausrichtung und/oder der Länge des einen oder der mehreren Führungselemente auf der Schleuderscheibe können unterschiedliche Abwurfcharakteristiken und somit unterschiedliche Streubilder eingestellt werden. Das eine oder die mehreren verstellbaren Führungselemente erlauben somit ein verbessertes Normal- und Grenzstreuen. Insbesondere kann die Länge des einen oder der mehreren Führungselemente über ein Teleskopieren des einen oder der mehreren Führungselemente mittels des Betätigungsglieds verändert werden.

In einer anderen Ausführungsform des erfindungsgemäßen Verteilgeräts ist die Druckquelle als Fluidanschluss ausgebildet, welcher dazu eingerichtet ist, mit einem Fluidsystem eines das Verteilgerät ziehenden oder tragenden Fahrzeugs fluidleitend verbunden zu werden. Das das Verteilgerät ziehende oder tragende Fahrzeug ist beispielsweise ein Traktor. Das Fluidsystem des das Verteilgerät ziehenden oder tragenden Fahrzeugs kann beispielsweise ein Pneumatiksystem oder ein Hydrauliksystem sein. Dadurch, dass die Druckquelle als Fluidanschluss ausgebildet ist, welcher dazu eingerichtet ist, mit dem Fluidsystem eines das Verteilgerät ziehenden oder tragenden Fahrzeugs fluidleitend verbunden zu werden, kann der an der zweiten Öffnung der Antriebswelle abnehmbare Druck des Betätigungsfluids direkt aus dem Fahrzeug gesteuert werden, sodass auch das Betätigungsglied direkt aus dem Fahrzeug steuerbar ist.

Alternativ kann die Druckquelle dazu eingerichtet sein, selbst ein flüssiges Betätigungsfluid oder ein gasförmiges Betätigungsfluid mit Druck zu beaufschlagen. Eine separate Fluidverbindung zu einem das Verteilgerät ziehenden oder tragenden Fahrzeugs ist somit nicht notwendig. Das flüssige Betätigungsfluid kann eine Hydraulikflüssigkeit sein. Das gasförmige Betätigungsfluid kann ein Gas oder ein Gasgemisch sein.

Das Verteilgerät kann außerdem mehrere Antriebswellen und/oder mehrere Schleuderscheiben aufweisen, welche entsprechend der vorstehend beschriebenen Ausführungsformen ausgebildet sein können.

Die Antriebswelle kann außerdem eine oder mehrere weitere Öffnungen aufweisen, welche fluidleitend mit der Ausnehmung verbunden sind, wobei die eine oder die mehreren Öffnungen entsprechend der vorstehend beschriebenen zweiten Öffnung ausgebildet sein können und/oder mit einer oder mehreren weiteren Betätigungsgliedern verbunden sein können. Vorzugsweise sind die beschriebenen Komponenten des Verteilgeräts Bestandteile einer Ausbringeinheit, wobei das Verteilgerät eine oder mehrere, insbesondere zwei, Ausbringeinheiten aufweisen kann.

Weitere Einzelheiten der Erfindung sind der Figurenbeschreibung und den Zeichnungen zu entnehmen. Es zeigen
- Fig. 1: ein Ausführungsbeispiel des erfindungsgemäßen Verteilgeräts in einer perspektivischen Darstellung;
- Fig. 2: eine Ausbringeinheit eines erfindungsgemäßen Verteilgeräts in einer perspektivischen Darstellung;
- Fig. 3: die in der Fig. 2 dargestellte Ausbringeinheit in einer weiteren perspektivischen Darstellung;
- Fig. 4: die in der Fig. 2 dargestellte Ausbringeinheit in einer Schnittdarstellung;
- Fig. 5: die in der Fig. 2 dargestellte Ausbringeinheit in einer Darstellung von unten;
- Fig. 6: eine weitere Ausbringeinheit eines erfindungsgemäßen Verteilgeräts in einer perspektivischen Darstellung; und
- Fig. 7: die in der Fig. 6 dargestellte Ausbringeinheit in einer Schnittdarstellung.

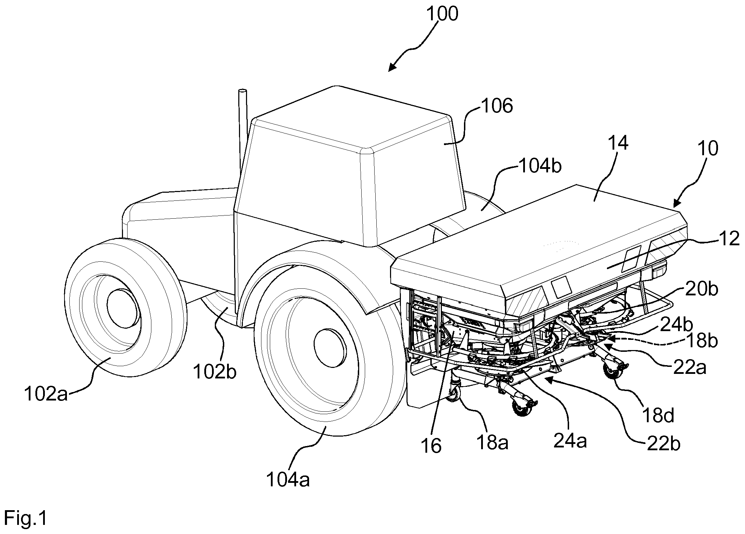

Das in der Fig. 1 dargestellte Verteilgerät 10 ist als Düngersteuer ausgebildet und wir von einem als Traktor ausgebildeten Fahrzeug 100 getragen.

Das Fahrzeug 100 weist zwei Vorderräder 102a, 102b und zwei Hinterräder 104a, 104b auf und umfasst ein Führerhaus 106.

Das Verteilgerät 10 umfasst einen Vorratsbehälter 12, welche dazu eingerichtet ist, Streugut, nämlich Dünger, zu bevorraten. Der Innenraum des Vorratsbehälters 12 wird von einem Behälterdeckel 14 abgedeckt. Der Vorratsbehälter 12 wird von einem Tragrahmen 16 getragen, wobei an dem Tragrahmen 16 auch zwei Dosierorgane 20a, 20b angeordnet sind. Das Dosierorgan 20a ist dazu eingerichtet, der Ausbringeinheit 22a eine dosierte Menge an Streugut zuzuführen. Das Dosierorgan 20b ist dazu eingerichtet, der Ausbringeinheit 22b eine dosierte Menge an Streugut zuzuführen. Beim Zuführen des Streuguts wird die dosierte Menge des den Vorratsbehälter 12 verlassenden Streuguts jeweils auf eine Schleuderscheibe 24a, 24b der Ausbringeinheiten 22a, 22b aufgegeben. Die Schleuderscheiben 24a, 24b der Ausbringeinheiten 22a, 22b beschleunigen das Streugut und werfen das Streugut aus.

An dem Tragrahmen 16 sind außerdem vier Stützräder 18a-18d befestigt, mittels welchen das Verteilgerät 10 verfahren werden kann, nachdem es von dem Fahrzeug 100 abgesetzt wurde und sämtliche Verbindungen zu dem Fahrzeug 100 gelöst wurden.

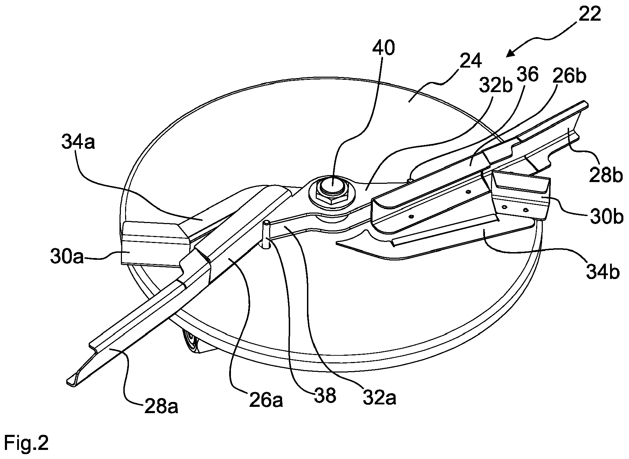

Die Fig. 2 zeigt eine Ausbringeinheit 22 eines als Düngerstreuer ausgebildeten Verteilgeräts 10. Beispielsweise können die Ausbringeinheiten 22a, 22b des in der Fig. 1 dargestellten Verteilgeräts 10 gemäß dieser Ausführung ausgebildet sein.

Die Ausbringeinheit 22 umfasst eine Schleuderscheibe 24, welche von einer Antriebswelle 40 rotierend angetrieben wird. Auf der Schleuderscheibe 24 sind zwei im Wesentlichen gegenüberliegende verstellbare Führungselemente 26a, 26b angeordnet, welche dazu eingerichtet sind, das auf die Schleuderscheibe 24 aufgegebene Streugut zu führen. Die Führungselemente 26a, 26b sind über die Verbindungsstege 32a, 32b miteinander verbunden. Ferner sind auf der Schleuderscheibe 24 ein erstes Paar von feststehenden Führungselementen 28a, 28b und ein zweites Paar von feststehenden Führungselementen 30a, 30b angeordnet.

Mittels eines Betätigungsstifts 36 sind die Führungselemente 26a, 26b von einer ersten dargestellten Position in eine zweite Position auf der Schleuderscheibe 24 verbringbar, wobei die Führungselemente 26a, 26b in der zweiten Position in Kontakt mit den Anschlagselementen 34a, 34b stehen. Wenn sich die Führungselemente 26a, 26b in der ersten Position befinden, wird das auf die Schleuderscheibe 24 aufgegebene Streugut durch die Führungselemente 26a, 26b zu den feststehenden Führungselementen 28a, 28b geleitet, welche das Streugut letztendlich auswerfen. Durch die Ausbildung und Anordnung der feststehenden Führungselemente 28a, 28b wird in der ersten Position der Führungselemente 26a, 26b ein Normalstreuen ausgeführt. Wenn sich die Führungselemente 26a, 26b in der zweiten Position befinden, wird das auf die Schleuderscheibe 24 aufgegebene Streugut durch die feststehenden Führungselemente 26a, 26b zu den Führungselementen 30a, 30b geleitet, welche das Streugut letztendlich auswerfen. Durch die Ausbildung und Anordnung der feststehenden Führungselemente 30a, 30b wird in der zweiten Position der Führungselemente 26a, 26b ein Grenzstreuen ausgeführt. Mittels eines Rückstellstifts 38 sind die Führungselemente 26a, 26b von der zweiten Position wieder in die erste Position auf der Schleuderscheibe 24 verbringbar.

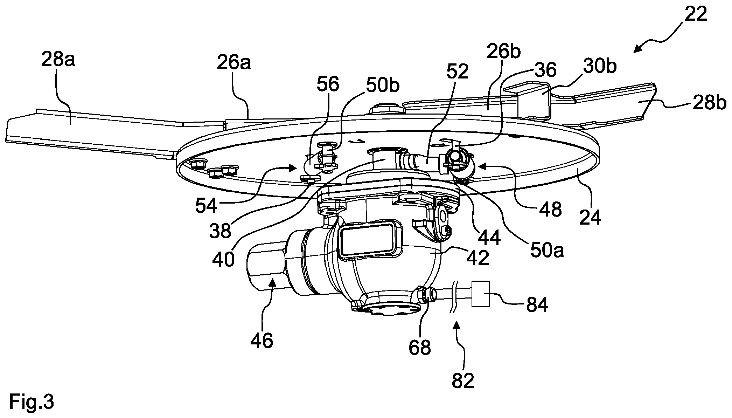

Die Fig. 3 zeigt, dass die Antriebswelle 40 abschnittsweise in einem Gehäuse 42 angeordnet ist, wobei an dem Gehäuse 42 ein Anschlussstutzen 68 befestigt ist. Der Anschlussstutzen 68 ist ein Bestandteil einer fluidleitenden Verbindung 82, welche eine Druckquelle 84 über eine erste Öffnung 62 der Antriebswelle 40 fluidleitend mit einer Ausnehmung 60 in der Antriebswelle 40 verbindet. Die Druckquelle 84 ist als Fluidanschluss ausgebildet, welcher dazu eingerichtet ist, mit einem Fluidsystem eines das Verteilgerät 10 tragenden Fahrzeugs 100 fluidleitend verbunden zu werden, sodass die Druckquelle ein mit Druck beaufschlagbares Betätigungsfluid bereitzustellen kann. Das Betätigungsfluid ist vorzugsweise eine Hydraulikflüssigkeit.

Unterhalb der Schleuderscheibe 24 ist ein als Hydraulikzylinder ausgebildetes Betätigungsglied 48 angeordnet, welches über die als Schlauch ausgebildete fluidleitende Verbindung 52, die Ausnehmung 60 in der Antriebswelle 40 und die fluidleitende Verbindung 82 fluidleitend mit der Druckquelle 84 verbunden ist. Das Betätigungsglied 48 ist dazu eingerichtet, mittels des Betätigungsfluids einen Betätigungsvorgang auszuführen. Hierfür stützt sich das Betätigungsglied 48 an einer Seite an einem fest mit der Schleuderscheibe 24 verbundenen Stift 50a ab, sodass eine Längenveränderung des Betätigungsglieds 48 ein Verfahren des Betätigungsstifts 36 verursacht, durch welchen die Führungselemente 26a, 26b bewegt werden, sodass die Führungselemente 26a, 26b mittels des Betätigungsglieds 48 verstellbar sind.

Unterhalb der Schleuderscheibe 24 ist außerdem eine Rückstelleinrichtung 54 angeordnet, welche dazu eingerichtet ist, einen Rückstellvorgang auszuführen, wenn das Betätigungsfluid einen Druckgrenzwert unterschreitet. Die Rückstelleinrichtung 54 weist eine Rückstellfeder 56 auf. Die Rückstelleinrichtung 54 stützt sich an einer Seite an einem fest mit der Schleuderscheibe 24 verbundenen Stift 50b ab, sodass eine Längenveränderung der Rückstelleinrichtung 54 ein Verfahren des Rückstellstifts 38 verursacht, durch welchen die Führungselemente 26a, 26b bewegt werden, sodass die Führungselemente 26a, 26b mittels der Rückstelleinrichtung 54 verstellbar sind.

Auf der der Schleuderscheibe 24 zugewandten Seite ist das Gehäuse 42 mittels eines Deckels 44 verschlossen. Ferner ist eine Eingangswelle 46 abschnittsweise in dem Gehäuse 42 angeordnet und drehmomentübertragend mit der Antriebswelle 40 verbunden.

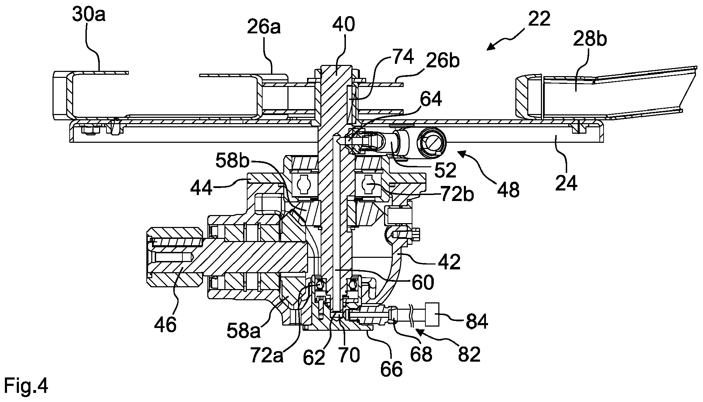

Die Fig. 4 zeigt, dass die Eingangswelle 46 über ein Kegelradpaar 58a, 58b mit der Antriebswelle 60 verbunden ist, wobei das Kegelradpaar 58a, 58b innerhalb des Gehäuses 42 angeordnet ist.

Die Ausnehmung 60 der Antriebswelle 40 erstreckt sich zwischen einer ersten Öffnung 62 und einer zweiten Öffnung 64, wobei sich die Ausnehmung 60 der Antriebswelle 40 in einem sich an die erste Öffnung 62 anschließenden Bereich in axialer Richtung erstreckt. An den sich in axialer Richtung erstreckenden Abschnitt der Ausnehmung 60 schließt sich ein sich in radialer Richtung durch die Antriebswelle 40 erstreckender Abschnitt der Ausnehmung 60 an.

Die erste Öffnung 62 ist an einer Stirnseite der Antriebswelle 40 angeordnet, wobei die zweite Öffnung 64 auf einer umlaufenden Mantelfläche der Antriebswelle 40 angeordnet ist. Die zweite Öffnung 64 der Antriebswelle 40 ist unterhalb der Schleuderscheibe 24 angeordnet. Somit sind das Betätigungsglied 48, die Rückstellfeder 56 der Rückstelleinrichtung 54 und die zweite Öffnung 64 der Antriebswelle 40 auf der gleichen Seite ausgehend von der Schleuderscheibe 24 angeordnet.

In dem Gehäuse 42 ist ein feststehendes Aufnahmeelement 66 angeordnet, welches dazu eingerichtet ist, die Antriebswelle 40 abzustützen. Innerhalb des Aufnahmeelements 66 ist eine Fluidkammer 70 angeordnet, welche unmittelbar vor der ersten Ausnehmung 62 in der Antriebswelle 40 positioniert ist. Das Aufnahmeelement 66 ist mit einem Anschlussstutzen 68 verbunden, wobei eine als Schlauch ausgebildete Leitung den Anschlussstutzen 68 fluidleitend mit der Druckquelle 84 verbindet. Die Fluidkammer 70, der Anschlussstutzen 68 und die als Schlauch ausgebildete Leitung sind jeweils Bestandteile der fluidleitenden Verbindung 82, welche die Ausnehmung 60 der Antriebswelle 40 mit der Druckquelle 84 verbindet. Das Aufnahmeelement 66 stützt die Antriebswelle 40 über ein Radiallager 72a ab. Zwischen dem Aufnahmeelement 66 und der äußeren Mantelfläche der Antriebswelle 60 ist eine dynamische Dichtung angeordnet. In einer alternativen Ausführungsform umfasst das Verteilgerät 10 kein gesondertes Aufnahmeelement 66. Vorzugsweise übernimmt das Gehäuse 42 in diesem Fall sämtliche Funktionen des nicht-vorhandenen Aufnahmeelements 66.

Zwischen dem Deckel 44 und der Antriebswelle 40 ist ein weiteres Lager 72b angeordnet. Die Antriebswelle 40 ist über eine Welle-Nabe-Verbindung 74 mit der Schleuderscheibe 24 verbunden.

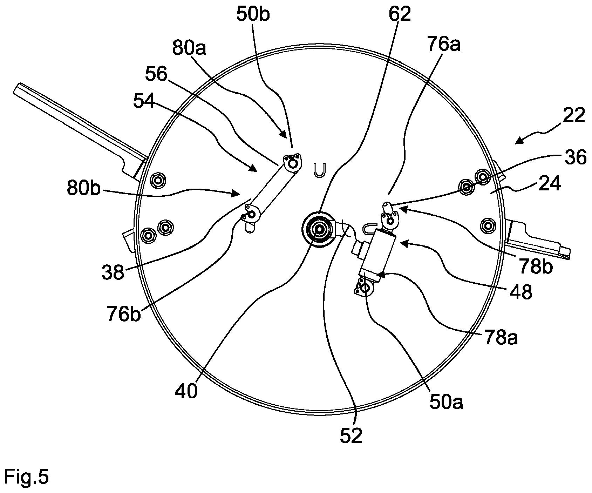

Die Fig. 5 zeigt, dass die Schleuderscheibe 24 zwei Langlöcher 76a, 76b aufweist, wobei sich der Betätigungsstift 36 durch das Langloch 76a und der Rückstellstift 38 durch das Langloch 76b erstreckt. Das Betätigungsglied 48 ist über die gelenkige Befestigung 78a mit dem Stift 50a und über die gelenkige Befestigung 78b mit dem Betätigungsstift 36 verbunden. Die Rückstelleinrichtung 54 ist über die gelenkige Befestigung 80a mit dem Stift 50b und über die gelenkige Befestigung 80b mit dem Rückstellstift 38 verbunden. Bei einer Längenänderung des Betätigungsglied 48 und der Rückstelleinrichtung 54 wird der Betätigungsstift 36 innerhalb des Langlochs 76a und der Rückstellstift 38 innerhalb des Langlochs 76b verfahren.

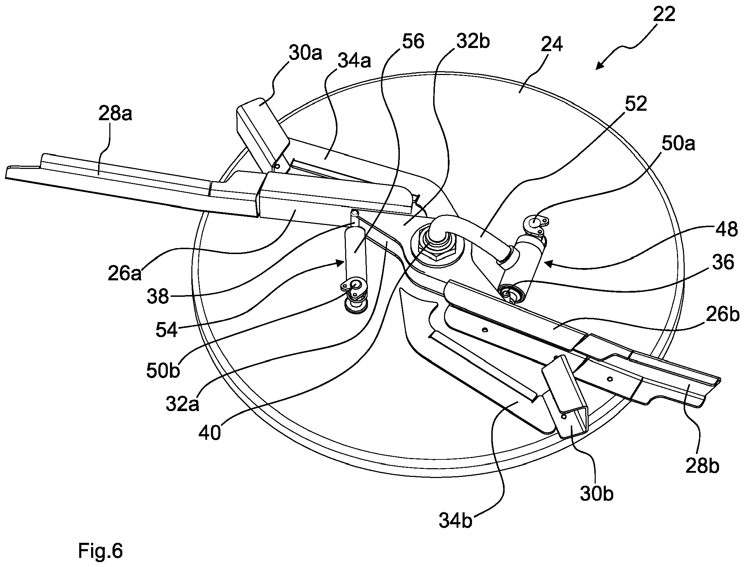

Die Fig. 6 zeigt eine alternative Ausführungsform einer Ausbringeinheit 22 eines Verteilgeräts 10, bei welcher das Betätigungsglied 48 und die Rückstelleinrichtung 54 oberhalb der Schleuderscheibe 24 und somit im Aufgabebereich der Schleuderscheibe 24 angeordnet sind.

Das Betätigungsglied 48 ist erneut über einen Stift 50a mit der Schleuderscheibe 24 verbunden, wobei ein mit dem Betätigungsglied 48 gekoppelter Betätigungsstift 36 innerhalb eines Langlochs (verdeckt) geführt wird und dazu eingerichtet ist, die Führungselemente 26a, 26b auf der Schleuderscheibe 24 zu verfahren. Die Rückstelleinrichtung 54 ist erneut über einen Stift 50b mit der Schleuderscheibe 24 verbunden, wobei ein mit der Rückstelleinrichtung 54 gekoppelter Rückstellstift 38 innerhalb eines Langlochs (verdeckt) geführt wird und dazu eingerichtet ist, die Führungselemente 26a, 26b auf der Schleuderscheibe 24 zu verfahren.

Die Ausbildung und Anordnung der Führungselemente 26a, 26b, 28a, 28b, 30a, 30b stimmt mit der Ausbildung und Anordnung der in den Fig. 2 bis 5 dargestellten Führungselemente 26a, 26b, 28a, 28b, 30a, 30b überein.

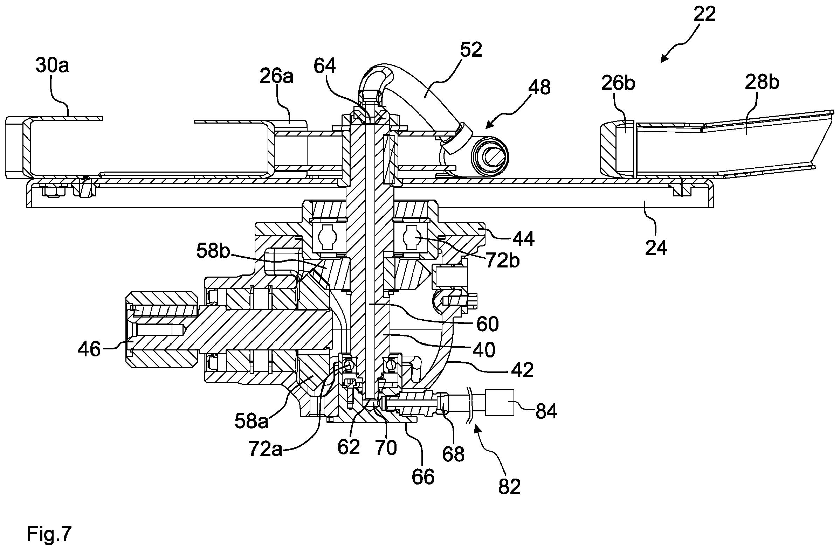

Die Fig. 7 zeigt, dass die zweite Öffnung 64 der Antriebswelle in diesem Ausführungsbeispiel an einer Stirnseite der Antriebswelle 40 angeordnet ist. Somit erstreckt sich die Ausnehmung 60 über die gesamte Länge der Antriebswelle 40, sodass die Antriebswelle 40 als Hohlwelle ausgebildet ist. Die erste Öffnung 62 und die zweite Öffnung 64 sind auf gegenüberliegenden Stirnseiten der Antriebswelle 40 angeordnet.

Ferner ist die zweite Öffnung 64 oberhalb der Schleuderscheibe 24 angeordnet, sodass auch die als Schlauch ausgebildete fluidleitende Verbindung 52 zwischen der zweiten Öffnung 64 und dem Betätigungsglied 48 oberhalb der Schleuderscheibe 24 angeordnet ist.

### Bezugszeichenliste

- 10: Verteilgerät
- 12: Vorratsbehälter
- 14: Behälterdeckel
- 16: Tragrahmen
- 18a-18d: Stützräder
- 20a, 20b: Dosierorgane
- 22, 22a, 22b: Ausbringeinheiten
- 24, 24a, 24b: Schleuderscheiben
- 26a, 26b: Führungselemente
- 28a, 28b: Führungselemente
- 30a, 30b: Führungselemente
- 32a, 32b: Verbindungsstege
- 34a, 34b: Anschlagselemente
- 36: Betätigungsstift
- 38: Rückstellstift
- 40: Antriebswelle
- 42: Gehäuse
- 44: Deckel
- 46: Eingangswelle
- 48: Betätigungsglied
- 50a, 50b: Stifte
- 52: fluidleitende Verbindung
- 54: Rückstelleinrichtung
- 56: Rückstellfeder
- 58a, 58b: Kegelräder
- 60: Ausnehmung
- 62: erste Öffnung
- 64: zweite Öffnung
- 66: Aufnahmeelement
- 68: Anschlussstutzen
- 70: Fluidkammer
- 72a, 72b: Lager
- 74: Welle-Nabe-Verbindung
- 76a, 76b: Langlöcher
- 78a, 78b: gelenkige Befestigungen
- 80a, 80b: gelenkige Befestigungen
- 82: fluidleitende Verbindung
- 84: Druckquelle

- 100: Fahrzeug
- 102a, 102b: Vorderräder
- 104a, 104b: Hinterräder
- 106: Führerhaus

## Patentansprüche

1. Verteilgerät (10) für Streugut, insbesondere Düngerstreuer, mit
- einer Antriebswelle (40), welche dazu eingerichtet ist, eine Schleuderscheibe (24, 24a, 24b) rotierend anzutreiben, wobei die Antriebswelle (40) eine sich zwischen einer ersten Öffnung (62) und einer zweiten Öffnung (64) erstreckende Ausnehmung (60) aufweist; und
- einer Druckquelle (84), welche dazu eingerichtet ist, ein mit Druck beaufschlagbares Betätigungsfluid bereitzustellen;
**gekennzeichnet durch** eine fluidleitende Verbindung (82), welche die Druckquelle (84) über die erste Öffnung (62) der Antriebswelle (40) fluidleitend mit der Ausnehmung (60) der Antriebswelle (40) verbindet.

2. Verteilgerät (10) nach Anspruch 1,
**dadurch gekennzeichnet, dass** die Ausnehmung (60) der Antriebswelle (40) sich zumindest abschnittsweise in axialer Richtung durch die Antriebswelle (40) und/oder zumindest abschnittsweise in radialer Richtung durch die Antriebswelle (40) erstreckt.

3. Verteilgerät (10) nach Anspruch 1 oder 2,
**dadurch gekennzeichnet, dass** die erste Öffnung (62) an einer Stirnseite der Antriebswelle (40) oder auf einer umlaufenden Mantelfläche der Antriebswelle (40) angeordnet ist.

4. Verteilgerät (10) nach einem der vorstehenden Ansprüche,
**dadurch gekennzeichnet, dass** die zweite Öffnung (64) an einer Stirnseite der Antriebswelle (40) oder auf einer umlaufenden Mantelfläche der Antriebswelle (40) angeordnet ist.

5. Verteilgerät (10) nach einem der vorstehenden Ansprüche, mit
- einer rotierend antreibbaren Schleuderscheibe (24, 24a, 24b),
**dadurch gekennzeichnet, dass** die zweite Öffnung (64) der Antriebswelle (40) unterhalb oder oberhalb der Schleuderscheibe (24, 24a, 24b) angeordnet ist.

6. Verteilgerät (10) nach einem der vorstehenden Ansprüche,
wobei die Antriebswelle (40) abschnittsweise in einem Gehäuse (42) angeordnet ist,
**dadurch gekennzeichnet, dass** an dem Gehäuse (42) ein Anschlussstutzen (68) befestigt ist und der Anschlussstutzen (68) einen Teil der fluidleitenden Verbindung (82) ausbildet.

7. Verteilgerät (10) nach einem der vorstehenden Ansprüche,
**gekennzeichnet durch** ein Betätigungsglied (48), welches fluidleitend mit der zweiten Öffnung (64) der Antriebswelle (40) verbunden und dazu eingerichtet ist, mittels des Betätigungsfluids einen Betätigungsvorgang auszuführen.

8. Verteilgerät (10) nach Anspruch 7,
**gekennzeichnet durch** eine Rückstelleinrichtung (54), welche dazu eingerichtet ist, einen Rückstellvorgang auszuführen, wenn das Betätigungsfluid einen Druckgrenzwert unterschreitet.

9. Verteilgerät (10) nach Anspruch 7 oder 8,
**dadurch gekennzeichnet, dass** das Betätigungsglied (48) an der Schleuderscheibe (24, 24a, 24b) befestigt ist.

10. Verteilgerät (10) nach einem der Ansprüche 7 bis 9,
**dadurch gekennzeichnet, dass** das Betätigungsglied (48) als Hydraulikzylinder oder als Pneumatikzylinder ausgebildet ist.

11. Verteilgerät (10) nach einem der Ansprüche 7 bis 10, mit
- einem oder mehreren verstellbaren Führungselementen (26a, 26b), welche dazu eingerichtet sind, das auf die Schleuderscheibe (24, 24a, 24b) aufgegebene Streugut zu führen;
**dadurch gekennzeichnet, dass** das eine oder die mehreren Führungselemente (26a, 26b) mittels des Betätigungsglieds (48) verstellbar sind.

12. Verteilgerät (10) nach Anspruch 11,
**dadurch gekennzeichnet, dass** die Position, die Ausrichtung und/oder die Länge des einen oder der mehreren Führungselemente (26a, 26b) auf der Schleuderscheibe (24, 24a, 24b) mittels des Betätigungsglieds (48) verstellbar sind.

13. Verteilgerät (10) nach einem der vorstehenden Ansprüche,
**dadurch gekennzeichnet, dass** die Druckquelle (84) als Fluidanschluss ausgebildet ist, welcher dazu eingerichtet ist, mit einem Fluidsystem eines das Verteilgerät (10) ziehenden oder tragenden Fahrzeugs (100) fluidleitend verbunden zu werden.

## Claims

1. Distributor (10) for material to be spread, in particular fertilizer spreader, having
- a drive shaft (40) which is configured to drive a centrifugal disc (24, 24a, 24b) in a rotating manner, wherein the drive shaft (40) has a recess (60) extending between a first opening (62) and a second opening (64); and
- a pressure source (84) which is configured to provide a pressurizable actuating fluid;
**characterized by** a fluid-conducting connection (82) which connects the pressure source (84) to the recess (60) of the drive shaft (40) in a fluid-conducting manner via the first opening (62) of the drive shaft (40) .

2. Distributor (10) according to Claim 1, **characterized in that** the recess (60) of the drive shaft (40) extends at least in sections in the axial direction through the drive shaft (40) and/or at least in sections in the radial direction through the drive shaft (40).

3. Distributor (10) according to Claim 1 or 2, **characterized in that** the first opening (62) is arranged on an end side of the drive shaft (40) or on an encircling lateral surface of the drive shaft (40).

4. Distributor (10) according to one of the preceding claims, **characterized in that** the second opening (64) is arranged on an end side of the drive shaft (40) or on an encircling lateral surface of the drive shaft (40) .

5. Distributor (10) according to one of the preceding claims, having
- a centrifugal disc (24, 24a, 24b) which can be driven in a rotating manner,
**characterized in that** the second opening (64) of the drive shaft (40) is arranged below or above the centrifugal disc (24, 24a, 24b).

6. Distributor (10) according to one of the preceding claims, wherein the drive shaft (40) is arranged in sections in a housing (42), **characterized in that** a connection stub (68) is fastened to the housing (42) and the connection stub (68) forms part of the fluid-conducting connection (82).

7. Distributor (10) according to one of the preceding claims, **characterized by** an actuating member (48) which is connected in a fluid-conducting manner to the second opening (64) of the drive shaft (40) and is configured to carry out an actuating operation by means of the actuating fluid.

8. Distributor (10) according to Claim 7, **characterized by** a resetting device (54) which is configured to carry out a resetting operation if the actuating fluid falls below a pressure limit value.

9. Distributor (10) according to Claim 7 or 8, **characterized in that** the actuating member (48) is fastened to the centrifugal disc (24, 24a, 24b).

10. Distributor (10) according to one of Claims 7 to 9, **characterized in that** the actuating member (48) is designed as a hydraulic cylinder or as a pneumatic cylinder.

11. Distributor (10) according to one of Claims 7 to 10, having
- one or more adjustable guide elements (26a, 26b) which are configured to guide the material to be spread, which is fed onto the centrifugal disc (24, 24a, 24b);
**characterized in that** the one or more guide elements (26a, 26b) is or are adjustable by means of the actuating member (48).

12. Distributor (10) according to Claim 11, **characterized in that** the position, the orientation and/or the length of the one or more guide elements (26a, 26b) is or are adjustable on the centrifugal disc (24, 24a, 24b) by means of the actuating member (48).

13. Distributor (10) according to one of the preceding claims, **characterized in that** the pressure source (84) is designed as a fluid connection which is configured to be connected in a fluid-conducting manner to a fluid system of a vehicle (100) pulling or carrying the distributor (10).

## Revendications

1. Appareil de distribution (10) pour une matière à épandre, en particulier épandeur d'engrais centrifuge, comprenant
- un arbre d'entraînement (40) qui est prévu pour entraîner en rotation un disque centrifuge (24, 24a, 24b), l'arbre d'entraînement (40) présentant un évidement (60) s'étendant entre une première ouverture (62) et une deuxième ouverture (64) ; et
- une source de pression (84) qui est prévue pour fournir un fluide d'actionnement pouvant être sollicité en pression ;
**caractérisé par** une liaison fluidique (82) qui relie la source de pression (84) par le biais de la première ouverture (62) de l'arbre d'entraînement (40) de manière fluidique à l'évidement (60) de l'arbre d'entraînement (40).

2. Appareil de distribution (10) selon la revendication 1,
**caractérisé en ce que** l'évidement (60) de l'arbre d'entraînement (40) s'étend au moins en partie dans la direction axiale à travers l'arbre d'entraînement (40) et/ou au moins en partie dans la direction radiale à travers l'arbre d'entraînement (40).

3. Appareil de distribution (10) selon la revendication 1 ou 2,
**caractérisé en ce que** la première ouverture (62) est disposée au niveau d'un côté frontal de l'arbre d'entraînement (40) ou sur une surface d'enveloppe périphérique de l'arbre d'entraînement (40) .

4. Appareil de distribution (10) selon l'une quelconque des revendications précédentes,
**caractérisé en ce que** la deuxième ouverture (64) est disposée au niveau d'un côté frontal de l'arbre d'entraînement (40) ou sur une surface d'enveloppe périphérique de l'arbre d'entraînement (40) .

5. Appareil de distribution (10) selon l'une quelconque des revendications précédentes, comprenant
- un disque centrifuge (24, 24a, 24b) pouvant être entraîné en rotation,
**caractérisé en ce que** la deuxième ouverture (64) de l'arbre d'entraînement (40) est disposée en dessous ou au-dessus du disque centrifuge (24, 24a, 24b).

6. Appareil de distribution (10) selon l'une quelconque des revendications précédentes,
dans lequel l'arbre d'entraînement (40) est disposé en partie dans un boîtier (42), **caractérisé en ce qu'**une tubulure de raccordement (68) est fixée au boîtier (42) et la tubulure de raccordement (68) constitue une partie de la liaison fluidique (82).

7. Appareil de distribution (10) selon l'une quelconque des revendications précédentes,
**caractérisé par** un organe d'actionnement (48) qui est connecté fluidiquement à la deuxième ouverture (64) de l'arbre d'entraînement (40) et qui est prévu pour effectuer une opération d'actionnement au moyen du fluide d'actionnement.

8. Appareil de distribution (10) selon la revendication 7,
**caractérisé par** un dispositif de rappel (54) qui est prévu pour effectuer une opération de rappel lorsque le fluide d'actionnement passe en dessous d'une valeur limite de pression.

9. Appareil de distribution (10) selon la revendication 7 ou 8,
**caractérisé en ce que** l'organe d'actionnement (48) est fixé au disque centrifuge (24, 24a, 24b).

10. Appareil de distribution (10) selon l'une quelconque des revendications 7 à 9,
**caractérisé en ce que** l'organe d'actionnement (48) est réalisé sous forme de cylindre hydraulique ou sous forme de cylindre pneumatique.

11. Appareil de distribution (10) selon l'une quelconque des revendications 7 à 10, comprenant
- un ou plusieurs éléments de guidage réglables (26a, 26b) qui sont prévus pour guider la matière à épandre déversée sur le disque centrifuge (24, 24a, 24b) ;
**caractérisé en ce que** le ou les éléments de guidage (26a, 26b) peuvent être réglés au moyen de l'organe d'actionnement (48).

12. Appareil de distribution (10) selon la revendication 11,
**caractérisé en ce que** la position, l'orientation et/ou la longueur du ou des éléments de guidage (26a, 26b) sur le disque centrifuge (24, 24a, 24b) peuvent être réglées au moyen de l'organe d'actionnement (48).

13. Appareil de distribution (10) selon l'une quelconque des revendications précédentes,
**caractérisé en ce que** la source de pression (84) est réalisée sous forme de raccord fluidique qui est prévu pour être connecté fluidiquement à un système fluidique d'un véhicule (100) portant ou tirant l'appareil de distribution (10).
